Europäisches Patentamt

(19) European Patent Office

Office européen des brevets

(11) Publication number: **0 140 845**
**B1**

(12) **EUROPEAN PATENT SPECIFICATION**

(45) Date of publication of patent specification: **10.02.88**

(21) Application number: **84830278.2**

(22) Date of filing: **16.10.84**

(51) Int. Cl.⁴: **B 60 G 9/02**

(54) **Improvements to motor vehicle suspensions.**

(30) Priority: **19.10.83 IT 6808083**

(43) Date of publication of application:
**08.05.85 Bulletin 85/19**

(45) Publication of the grant of the patent:
**10.02.88 Bulletin 88/06**

(84) Designated Contracting States:
**DE FR GB IT**

(56) References cited:
**DE-A-1 555 331**
**DE-A-1 655 540**
**DE-A-1 911 795**
**DE-A-2 740 844**
**DE-A-3 028 124**
**FR-A- 810 570**
**FR-A-2 258 279**
**FR-E- 70 690**
**GB-A-1 078 460**
**GB-A-2 048 795**
**US-A-3 785 672**

(73) Proprietor: **FIAT AUTO S.p.A.**
**Corso Giovanni Agnelli 200**
**I-10135 Torino (IT)**

(72) Inventor: **Morello, Lorenzo**
**Via Guidobono Domenico, 15**
**I-10137 Torino (IT)**

(74) Representative: **Notaro, Giancarlo et al**
**c/o Jacobacci-Casetta & Perani S.p.A. Via Alfieri,**
**17**
**I-10121 Torino (IT)**

EP 0 140 845 B1

Courier Press, Leamington Spa, England.

## Description

The present invention relates to motor vehicle suspensions of the type indicated in the precharacterising portion of the annexed Claim 1.

A suspension of this type is known from DE—A—1 911 795.

In designing suspensions for motor vehicles, particularly in the case of rear suspensions for front-wheel drive motor vehicles, difficulties are encountered in ensuring uniform behaviour of the motor vehicle on a bend, whatever its condition of loading.

Particularly in the case of front-wheel drive vehicles in which the weight of the engine bears entirely on the front axle, there is a considerable variation in the load on the rear axle according to whether the vehicle is empty or fully loaded. This is usually shown by the differing behaviour of the vehicle on a bend in that, with an increased load on the rear axle, the rear tyres are characterised by greater drift engagement (the tyres deform more and allow greater transverse displacement of the wheel during forward movement on a bend). In more detail, because of the greater drift of the rear tyres on a bend, the motor vehicle exhibits oversteering under full loading conditions while under minimum loading conditions the motor vehicle exhibits understeering.

The object of the present invention is to provide a motor vehicle suspension which will ensure a substantially uniform behaviour (and, more specifically, understeering) of the motor vehicle on a bend whatever the loading condition of the motor vehicle.

According to the invention, this object is achieved by providing a suspension having the features indicated in the appended Claim 1.

In this description and the following claims, the term "transverse" refers to a direction perpendicular to the median vertical plane of the motor vehicle, whilst the term "longitudinal" refers to a direction parallel to the direction of travel of the motor-vehicle. Moreover, the terms "front" and "rear" are used with reference to the motor vehicle.

By virtue of the aforesaid characteristics, it is possible (for reasons which will be explained below) to design the suspension in such a manner that the motor vehicle will always exhibit understeering on a bend, whatever its loading conditions. Furthermore, relative to transverse displacements of the central part of the axle, the elastically-yielding connection means have a relatively high rigidity for deformations below a predetermined value, and decreasing rigidity as deformation increases beyond this predetermined value.

Due to this characteristic, the risk of the axle being able to rotate in the horizontal plane, even during travel in a straight line, as a result of possible transverse stresses caused by rough ground is avoided, and, moreover, there is also the result that the understeering behaviour caused by rotation of the axle in the horizontal plane will be more marked the greater the transverse accelerations are on a bend.

Also, the elastically-yielding connection means have lower rigidity values in the transverse direction upon increases in the vertical load on the suspension.

In more detail, the trailing arms, which have their ends aligned on a transverse axis substantially coincident with the transverse axis of articulation of the axle, are arranged in two directions converging towards the rear of the motor vehicle.

By virtue of the aforesaid characteristics, it is possible (for reasons which will be explained below) to design the suspension in such a manner that the motor vehicle will always exhibit understeering on a bend, whatever its loading conditions.

A further preferred characteristic of the invention lies in that, relative to transverse displacements of the central part of the axle, the elastically-yielding connection means have a relatively high rigidity for deformations below a predetermined value, and decreasing rigidity as deformation increases beyond this predetermined value.

Due to this characteristic, the risk of the axle being able to rotate in the horizontal plane, even during travel in a straight line, as a result of possible transverse stresses caused by rough ground is avoided, and, moreover, there is also the result that the understeering behaviour caused by rotation of the axle in the horizontal plane will be more marked the greater the transverse accelerations are on a bend.

A further preferred characteristic of the suspension according to the invention lies in the fact that the elastically-yielding connection means have lower rigidity values in the transverse direction upon increases in the vertical load on the suspension.

In this manner, the understeering behaviour brought about by rotation of the axle in the horizontal plane becomes more marked upon increases in the load on the motor vehicle, thus contributing advantageously to uniformity of behaviour on a bend, whatever the loading conditions.

By virtue the aforesaid characteristics, control of axle rotation in the horizontal plane is also obtained in relation to the road holding of the rear wheels in the transverse sense. The transverse torque at the central part of the axle is, in fact, proportional to the transverse force originating in the area of contact between the rear wheels and the road surface following drift of the tyres, and this transverse force is proportional to the vertical load acting on the wheels.

Further characteristics and advantages of this invention will emerge from the description which follows with reference to the accompanying drawings, supplied purely by way of non-limitative example, in which:

Figure 1 is a diagrammatic plan view of a motor vehicle suspension according to the invention,

Figure 2 shows the suspension of Figure 1 in a different condition of operation,

Figure 3 is a diagrammatic plan view of a motor vehicle during cornering,

Figure 4 is a section along the line IV of Figure 1,

Figure 5 is a section along the line V of Figure 4,

Figure 6 is a section along the line VI of Figure 5, and

Figures 7 to 9 are graphs showing the characteristics of the suspension according to the invention.

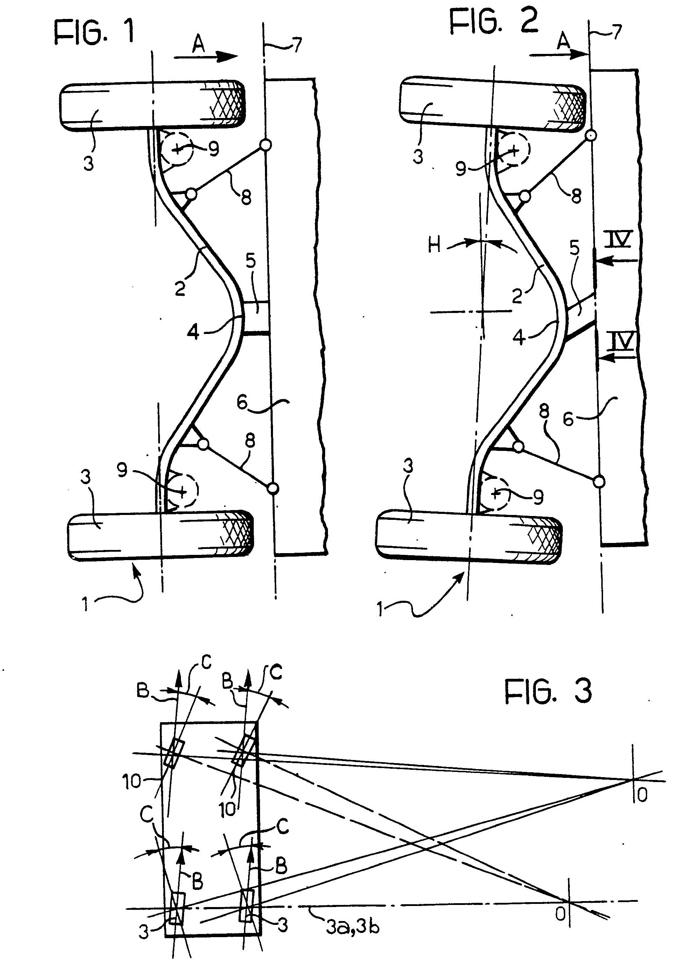

In Figures 1 and 2, a rear suspension, generally indicated 1, for front-wheel drive motor vehicles includes an axle 2 carrying the two rear wheels 3 of the motor vehicle at its ends.

The axle 2 is shaped substantially as a V arranged in a horizontal plane so that its central part (indicated 4) is displaced towards the front of the motor vehicle (In Figures 1 and 2 the direction of travel of the motor vehicle is shown by the arrow A).

The suspension 1 further includes elastically-yielding means, comprising, in the example shown, an elastic support 5 (shown diagrammatically in Figures 1 and 2), for the articulated connection of the central part 4 of the axle 2 to the body of the motor vehicle (indicated 6) about a transverse axis 7. The characteristics of the support 5 will be described in detail below.

The axle 2 is further connected to the body 6 by two trailing arms 8, each of which has a front end articulated to the body 6 and a rear end articulated to the axle 2 adjacent a respective end part of the latter. The front ends of the two torque arms 8 are aligned on a transverse axis which coincides with the axis 7.

The resilient means of the suspension consist of a pair of helical springs interposed between the end parts of the axle and the body. In the drawings, the attachment points of these springs are indicated 9.

As can be clearly seen from Figure 1, the suspension described above differs from others of the same type made previously, in that the two trailing arms 8 are arranged in two directions which converge towards the rear of the motor vehicle.

Moreover, as will be described in greater detail below, the elastic damping support 5 is capable of allowing both small movements of the axle in the transverse direction and small rotations about a vertical axis relative to the body of the motor vehicle.

Referring to Figure 3, which shows diagrammatically in plan view a vehicle with rear wheels 3 and front wheels 10 while it is taking a right-hand bend, the point 0 shows the position of the axis of rotation of the vehicle, through which the axes 3a, 3b, and 10a, 10b of the wheels 3, 10 should pass in theory, precisely as shown in the drawing. It is known in fact that, as a result of errors due to the steering connections, the prolongations of the axes of the front and rear wheels do not generally encounter the axis of rotation of the vehicle. In this case, the motion of each wheel results from a rolling movement and a displacement in the transverse direction, the transverse displacement being able to occur without any clear effect of slipping in contact with the ground due to deformation of the tyres.

During the steering manoeuvre, the transverse acceleration to which the vehicle is subjected causes a corresponding stress which tends to push the axle 2 in the transverse direction relative to the body which is proportional to the road holding forces in the transverse direction in the areas of contact between the tyres of the rear wheels and the ground.

In the case of the example shown with reference to a right-hand bend, the axle 2 tends to shift to the right (referring to Figure 1) in relation to the body of the motor vehicle.

As shown in Figure 2, the transverse displacement of the axle 2 to the right, allowed by the support 5, thus causes, due to the particular inclination of the trailing arms 8, a clockwise rotation (with reference to the drawings) of the axle by an angle indicated I. This rotation of the axle 2 tends to cause the motor vehicle to turn to the left, that is, to understeer in relation to a turn to the right.

Hence, still referring to Figure 3, the axis of rotation of the vehicle shifts from point 0 to point 0' so that the directions of the actual movements of the wheels 10, 3 are those indicated by the arrow B in Figure 3 (perpendicular to the straight-lines joining the wheel centres to the centre of rotation of the vehicle). The letters C indicate the drift angles of each tyre.

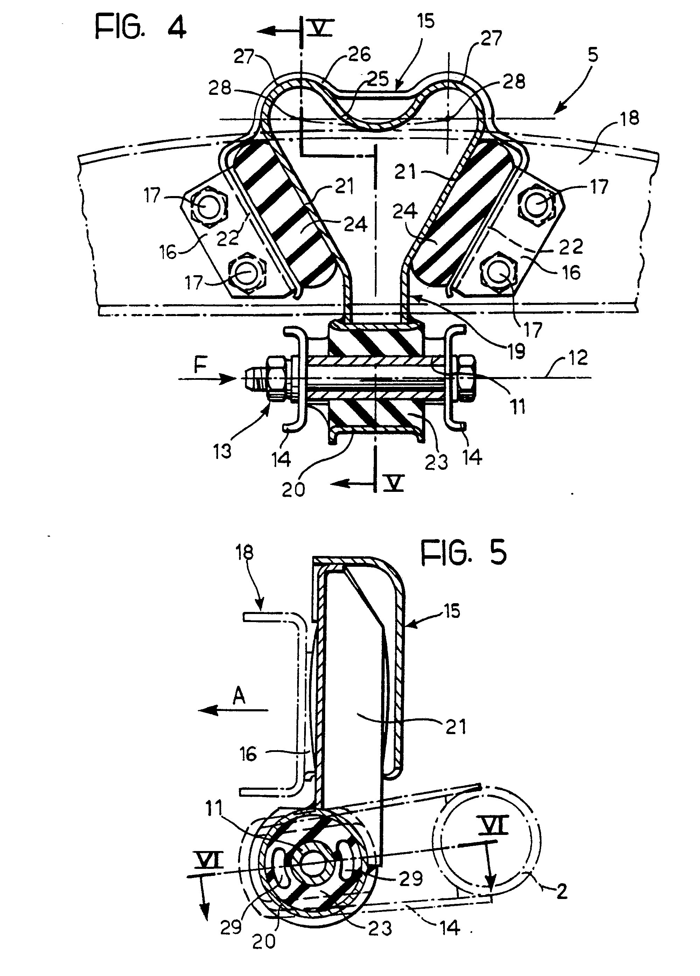

Figures 4 to 6 show a preferred embodiment of the support 5 for connecting the central part 4 of the axle to the body of the motor vehicle.

It is clear, however, that the elastically-yielding means connecting the axle to the body may be constituted by any other type of mechanical, hydraulic, pneumatic or electromechanical device and may possibly make use of an electronic control.

In the solution shown, the support 5 includes a first anchoring element consisting of a metal bush 11 having its axis 12 directed transversely and being fixed by a bolt 13 to two appendages 14, which project from the central part of the axle 2.

The support 5 also includes a second anchoring element 15 including a pair of flanges 16 fixed by bolts 17 to a cross member 18 which forms part of the body of the motor vehicle.

Between the first and second anchoring elements 11, 15 there is interposed an intermediate metal element 19. This intermediate metal element 19 is provided with a tubular metal part 20 which coaxially surrounds the metal bus 11. The intermediate element 19 also has two flat side walls 21 parallel to the longitudinal direction of the motor vehicle and so inclined as to define a V in a plane perpendicular to this longitudinal direction. The two walls 21 face two corresponding walls 22 similarly inclined and forming part of the second metal anchoring element 15.

The support 5 includes first elastic damping means comprising an annular body of elastomeric material 23 having its inner and outer surfaces joined respectively to the bush 11 and to the tubular part 20 of the intermediate element 19, and second elastic damping means comprising two small blocks of elastomeric material 24 interposed in a prestressed condition between the two pairs of facing walls 21, 22.

The metal intermediate element 19, and the metal anchoring element 15 have two superimposed walls 25, 26 which are in contact with each other in two distinct areas 27 of circular profile. Thus, it is possible to rotate the intermediate element 19 relative to the anchoring element 15 about either one of two longitudinal axes 28 vertically spaced from the axis 12. The two small blocks 24 tend to oppose rotation of the intermediate element 19 about either of the two axes 28 and, moreover, they urge the intermediate element upwards against the corresponding areas of contact with the wall 26 of the anchoring element 15.

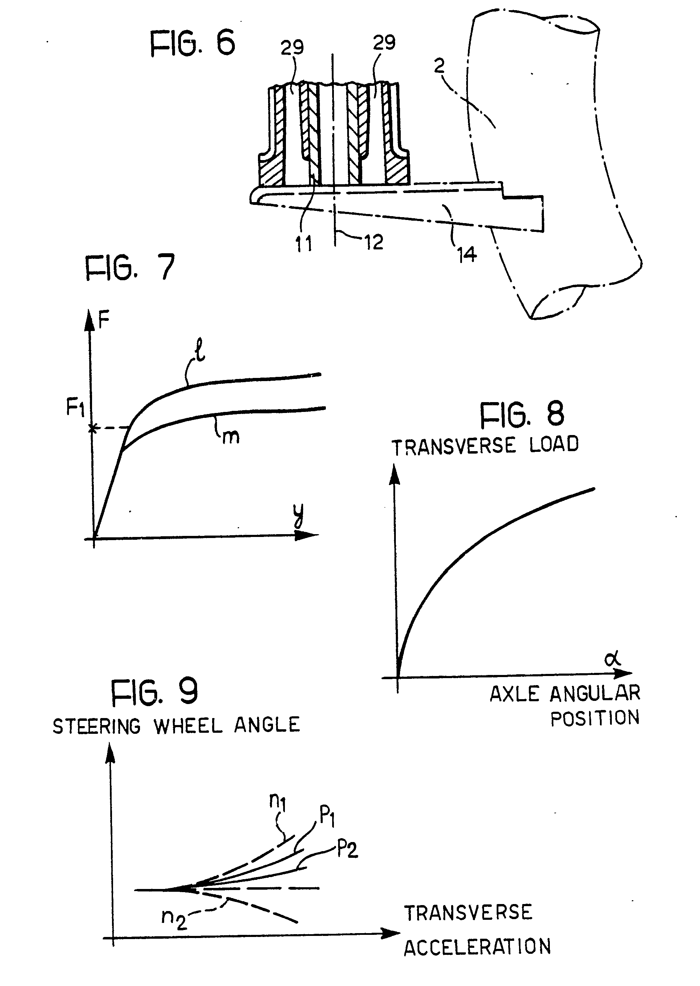

As can be seen in Figures 5 and 6, the annular elastomeric element 23 has two slots 29 aligned with each other in a substantially longitudinal direction.

By virtue of the particular construction and arrangement described above, the support 5 has a number of advantageous characteristics:

Rigidity of the support in relation to movements of the central part of the axle 2 in the longitudinal direction will be relatively small (such as to allow movements of the order of 5—6 mm) insofar as these movements are permitted by deformation of the annular elastomeric body 23 and this deformation is facilitated by the existence of the slots 29.

Thus, excessively high stresses in the longitudinal direction are avoided.

Rigidity of the support 15 in relation to movements of the central part of the axle 2 in the vertical direction will be high (the parts of the annular elastomeric body 23 above and below the metal bush 11 are in fact without slots) so as to permit correct working of the suspension.

Rigidity of the support 15 in relation to rotations of the axle about a longitudinal axis is relatively small. The same applies to rigidity of the support in relation to rotations of the axle about the axis 12.

Rigidity of the support 5 in relation to rotations of the axle about a vertical axis (see Figure 2) is high, but nevertheless capable of allowing small amounts of rotation.

Finally, regarding the rigidity of the support in relation to movements of the central part of the axle 2 in the transverse direction, this is relatively high (as will be described in detail below) for transverse deformations below a predetermined value but diminishes progressively with an increase in the deformation beyond this predetermined value. Moreover, for the reasons which are explained below, the support 5 possesses lower values of rigidity in the transverse direction upon increases in the loading on the rear axle of the motor vehicle.

As shown in Figure 1, the resilient means 9 of the suspension are shifted towards the front of the motor vehicle relative to the axis of the rear wheels. From this it follows that for any given loading condition of the motor vehicle, the reaction of the resilient means 9 produces a downward thrust which is transmitted by the central part 4 of the axle 2 to the support 5. More specifically, this downward thrust, which obviously increases with an increase in the load on the rear axle of the motor vehicle, is transmitted by the axle 2 to the intermediate metal element 19 through the elastomer body 23.

When the axle 2 is subjected to a transverse load F (see Figure 4) as in the case illustrated in Figure 2, a transverse displacement of the central part of the axle occurs initially after deformation of the annular elastomer body 23. The rigidity of this body 23 in relation to movements of this kind is relatively high and, and as already described above, this prevents even small transverse loads, such as those occuring, for example, during travel in a straight line on a motorway due to uneven road surfaces, from causing a transverse displacement of the axle and its consequent rotation in the horizontal plane.

When the transverse load F reaches values greater than those which can be absorbed by deformation of the annular elastomeric body 23, such loads tend to cause rotation of the intermediate metal element 19 about one of the two longitudinal axes 28. As described above, the two small blocks 24 thrust the intermediate element 19 against the lower surface of the wall 26. This wall 26 therefore exerts two reaction forces directed downwards corresponding with the two areas of contact 27. Referring to the example shown in Figure 4, the action of the transverse load F causes a progressive reduction in the reaction force at the area of contact 27 shown on the left. When the reaction force at the area of contact on the left is nil, the intermediate element 19 rotates about the longitudinal axis 28 on the right, with consequent tangential stress and compression of the small blocks 24. In the graph of Figure 7 of the accompanying drawings, curve 1 shows the force-displacement characteristic, still referring to transverse movements of the support 5.

As seen from the graph, when the transverse load is less than a value $F_1$, rigidity in the transverse direction is relatively high and consequently displacements are small. For transverse forces above $F_1$ (which is the value corresponding to maximum deformation of the annular elastomeric body 23) the rigidity of the support decreases.

Since the downward thrust transmitted from the axle 2 to the intermediate element 19 increases with an increase in the load on the rear axle, the reaction forces transmitted by the wall 26 to the wall 25 in the two areas of contact 27 will consequently be reduced, so that the intermediate element 19 can start to rotate at lower values of the transverse load. From this it follows that the force-displacement curve corresponding to a greater load is shifted downwards, as shown by the line m in Figure 7.

Thus, transverse yielding and consequent rotation in the horizontal plane of the rear axle are more marked the higher the load on the rear axis. This means that the understeering effect due to rotation of the axle in the horizontal plane increases with the increase in the load on the rear axis, that is, upon an increase in the tendency of the motor vehicle to oversteer.

It is thus possible to see that the vehicle has a substantially uniform behaviour (and, specifically, understeering) whatever its loading condition. The graph of Figure 8 shows the variation of the angular position of the axle in a horizontal plane as a function of the transverse load.

The graph of Figure 9, on the other hand, shows the variation in the angle of steering wheel of the motor vehicle as a function of the transverse acceleration for a given radius of curvature.

The lines $n_1$ and $n_2$ relate to a suspension according to the prior art which does not provide for rotation of the axle, in conditions of minimum loading and full loading of the motor vehicle, respectively. As can be seen, when the vehicle is unladen, its behaviour is understeering (the transverse acceleration increases with the increase in the angle of the steering wheel) whereas, when the vehicle is fully loaded, the behaviour of the vehicle is oversteering (the transverse acceleration increases as the angle of the steering wheel decreases).

The two lines $P_1$ and $P_2$ show the behaviour of a motor vehicle having a suspension according to the invention in conditions of minimum and full loading. As can be seen, in this case the motor vehicle understeers even under the condition of full-loading and the difference in behaviour with a variation in the load is much less than that occurring in known solutions.

**Claims**

1. Suspension for motor vehicles, comprising:
an axle (2) carrying two wheels of the motor vehicle at its ends and being shaped substantially as a V disposed in a horizontal plane such that its central part (4) is displaced towards the front of the motor vehicle,
elastically-yielding connection means (5) for the articulated connection of the central part of the axle to the body of the motor vehicle about a transverse axis (7), said connection means allowing both transverse displacements of the central part (4) and its rotation about a vertical axis,
a pair of trailing arms (8) each connected at one end to the body of the motor vehicle (6) and at the opposite end to the axle (2) in correspondence with a respective end part of the latter, the trailing arms (8) being arranged in two directions which converge towards the rear of the motor vehicle, and
resilient means (9) interposed between the end parts of the axle (2) and the body (6) of the motor vehicle, characterised in that the two trailing arms (8) have their front ends aligned on a transverse axis coinciding substantially with the transverse axis (7) of articulation of the axle (2) and in that the elastically-yielding connection means are constituted by an elastic support (5) which comprises:
a first anchoring element (11) fixed to the central part of the axle,
a second anchoring element (15) fixed to the body (6) of the motor vehicle,
an intermediate element (19),
first elastic means (23) interposed between the intermediate element (19) and the first anchoring element (11),
second elastic means (24) interposed between the intermediate element (19) and the second anchoring element, and
means for the articulated support of the intermediate element (19) on the second anchoring element (15) about at least one longitudinal axis (28) spaced vertically from the central part (4) of the axle,
in which the first elastic means comprise an annular body (23) of elastomeric material having its axis directed transversely to the symmetry plane and its inner and outer surfaces respectively joined to the first anchoring element (11) and to the intermediate element (19),
in which the second elastic means (24) are so arranged as to oppose any rotation of the intermediate element (19) about the said longitudinal axis (28),
in which the resilient means (9) of the suspension are shifted towards the front of the motor vehicle relative to the end parts of the axle (2), whereby the load bearing upon the suspension causes a downward thrust transmitted from the central part (4) of the axle (2) to the elastic support, and
in which means are provided to bring about, upon an increase in the vertical load on the suspension, a reduction in the minimum value of the transverse force sufficient to cause a rotation of the intermediate element (19) about the said longitudinal axis.

2. Suspension according to Claim 1, characterised in that the intermediate element (19) and the second anchoring element (15) have two superimposed walls (25, 26) in contact with each other in two distinct areas of contact (27), the wall of the intermediate element (19) being in the lower position, in that the areas of contact (27) are so shaped as to allow the intermediate element (19) to rotate about one area of contact or the other in correspondence with a respective longitudinal axis (28), and in that the second elastic damping means (24) are so arranged as exert two transverse thrusts directed towards one another on the two sides of the intermediate element (19) so as to oppose rotation of the latter about either of the two areas (27), and a vertical upward thrust, tending to keep the intermediate element (19) and the second anchoring element (15) in contact with each other in correspondence with said areas (27).

3. Suspension according to Claim 2 characterised in that the second elastic means comprise, two small blocks of elastomeric material (27) disposed in two planes inclined like a V in a plane perpendicular to the longitudinal direction of the motor vehicle, each small block (24) being interposed in a prestressed condition between a respective inclined lateral wall (21) of the intermediate element (19) and a wall (22) with an inclination corresponding to the second anchoring element (15).

4. Suspension according to Claim 1, characterised in that the annular body (23) of elastomeric material has at least two diametrically opposing slots aligned in a substantially longitudinal direction.

**Patentansprüche**

1. Kraftfahrzeug-Aufhängung

mit einer an ihren Enden zwei Räder des Kraftfahrzeugs tragenden, im wesentlichen V-förmig ausgebildeten Achse (2), die derart in einer horizontalen Ebene angeordnet, daß ihr Mittelteil (4) zur Vorderseite des Kraftfahrzeugs hin versetzt ist,

mit elastisch nachgiebigen Verbindungsmitteln (5), durch die der Mittelteil der Achse (2) um eine transversale Gelenkachslinie (7) schwenkbar mit der Fahrzeugkarosserie (6) verbindbar ist und die (5) sowohl eine Verschiebung des Mittelteils (4) in Querrichtung als auch seine Drehung um eine vertikale Achslinie ermöglichen,

mit zwei Zugarmen (8), die jeweils mit einem Ende an der Fahrzeugkarosserie (6) und mit dem entgegengesetzten Ende jeweils in einem der Endbereiche der Achse (2) mit dieser verbunden sind und die (8) in zwei Richtungen angeordnet sind, die zur Rückseite des Kraftfahrzeugs hin konvergieren,

sowie mit zwischen den Endbereichen der Achse (2) und der Fahrzeugkarosserie (6) angeordneten Federmitteln (9),

dadurch gekennzeichnet,

daß die vorderen Enden der beiden Zugarme (8) auf einer transversalen Achslinie ausgerichtet sind, die im wesentlichen mit der transversalen Gelenkachslinie (7) der Achse (2) zusammenfällt,

daß die elastisch nachgiebigen Verbindungsmittel von einer elastischen Halterung (5) gebildet sind, die folgende Teile aufweist:

—ein an dem Mittelteil der Achse (2) befestigtes erstes Verankerungselement (11),

—ein an der Fahrzeugkarosserie (6) befestigtes zweites Verankerungselement (15),

—ein Zwischenelement (19),

—zwischen dem Zwischenelement (19) und dem ersten Verankerungselement (11) angeordnete erste elastische Mittel (23),

—zwischen dem Zwischenelement (19) und dem zweiten Verankerungselement (15) angeordnete zweite elastische Mittel (24) und

—Mittel für die gelenkige Halterung des Zwischenelements (19) an dem zweiten Verankerungselement (15) derart, daß es (19) um wenigstens eine longitudinale Achslinie (28) schwenkbar ist, die in vertikaler Richtung von dem Mittelteil (4) der Achse (2) beabstandet ist,

daß die ersten elastischen Mittel einen ringförmigen Körper (23) aus elastomerem Werkstoff aufweisen, dessen Achslinie quer zur Symmetrieebene verläuft und dessen Innen- und Außenflächen mit dem ersten Verankerungselement (11) bzw. dem Zwischenelement (19) fest verbunden sind,

daß die zweiten elastischen Mittel (24) derart angeordnet sind, daß sie einer Drehung des Zwischenelements (19) um die genannte longitudinalen Achslinie (28) entgegenwirken,

daß die Federmittel (9) der Aufhängig relativ zu den Endbereichen der Achse (2) zur Vorderseite des Kraftfahrzeugs hin versetzt sind, wodurch die auf die Aufhängung wirkende Belastung eine nach unten weisende Druckkraft verursacht, die von dem Mittelteil (4) der Achse (2) auf die elastische Halterung übertragen wird,

und daß Mittel vorgesehen sind, die bei einem Anwachsen der auf die Aufhängung einwirkenden vertikalen Belastung ein Verringerung des Mindestwerts der Transversalkraft verursacht, die groß genug ist, um eine Drehung des Zwischenelements (19) um die genannte longitudinale Achslinie hervorzurufen.

2. Aufhängung nach Anspruch 1, dadurch gekennzeichnet,

daß das Zwischenelement (19) und das zweite Verankerungselement (15) zwei übereinanderliegende Wandungen (25, 26) haben, die einander in zwei verschiedenen Kontaktbereichen (27) berühren, wobei die Wandung des Zwischenelements (19) sich in der niedrigen Position befindet,

daß die Kontaktbereiche (27) so geformt sind, daß sie eine Drehung des Zwischenelements (19) um den einen oder den anderen Kontaktbereich entsprechend einer zugeordneten longitudinalen Achslinie (28) ermöglichen,

und daß die zweiten elastischen Mittel (24) derart angeordnet sind, daß sie auf die beiden Seiten des Zwischenelements (19) zwei aufeinander zu gerichtete transversale Druckkräfte ausüben und somit der Drehung des letzteren um einen der beiden Kontaktbereiche (27) Widerstand entgegensetzen, sowie eine vertikal nach oben gerichtete Druckkraft, die dazu tendiert, das Zwischenelement (19) und das zweite Verankerungselement (15) in den Kontaktbereichen miteinander in Berührung zu halten.

3. Aufhängung nach Anspruch 2, dadurch gekennzeichnet, daß die zweiten elastischen Mittel zwei kleine Blöcke (24) aus elastomerem Werkstoff aufweisen, die in zwei Ebenen angeordnet sind, welche in einer senkrecht zur Längsrichtung des Kraftfahrzeugs verlaufenden Ebene V-förmig geneigt sind, wobei jeder dieser kleinen Blöcke (24) in vorgespanntem Zustand zwischen eine entsprechende geneigte Seitenwandung (21) des Zwischenelements (19) und eine Wandung (22) eingesetzt ist, die eine dem zweiten Verankerungselement (15) entsprechende Neigung besitzt.

4. Aufhängung nach Anspruch 1, dadurch gekennzeichnet, daß der ringförmige Körper (23) aus elastomerem Werkstoff wenigstens zwei einander diametral entgegengesetzte Schlitze besitzt, die im wesentlichen in Längsrichtung ausgerichtet sind.

## Revendications

1. Suspension pour véhicule à moteur comprenant:

un essieu (2) portant deux roues du véhicule à moteur à ses extrémités et étant conformé de façon à présenter sensiblement la forme d'un V, disposé dans un plan horizontal, de telle sorte que sa partie centrale (4) est tournée vers l'avant du véhicule,

des moyens (5) de liaison élastique et souple pour réaliser la liaison articulée de la partie central de l'essieu sur le châssis du véhicule par rapport à un axe transversal (7), les moyens de liaison permettant à la fois des déplacements transversaux de la partie centrale (4) et sa rotation par rapport à un axe vertical,

une paire de bras supports (8) dont chacun est fixé à l'une de ses extrémités au châssis du véhicule (6), et à son autre extrémité à l'essieu (2), à proximité des extrémités de ce dernier, les deux bras (8) étant orientés selon deux directions qui convergeant vers l'arrière du véhicule,

des moyens amortisseurs (9) interposés entre les extrémités de l'essieu (2) et le châssis (6) du véhicule,

caractérisée en ce que les deux bras supports (8) ont leurs extrémités avant situées sur un axe transversal coïncidant sensiblement avec l'axe transversal (7) d'articulation de l'essieu (2) et en ce que les moyens de liaison élastique et souple sont constitués par un support élastique (5) qui comprend:

un premier élément d'ancrage (11) fixé sur la partie centrale de l'essieu,

un second élément d'ancrage (15) fixé au châssis (6) du véhicule à moteur,

un élément intermédiaire (19),

des premiers moyens élastiques (23) interposés entre l'élément intermédiaire (19) et le premier élément d'ancrage (11),

des seconds moyens élastiques (24) interposés entre l'élément intermédiaire (19) et le second élément d'ancrage,

des moyens pour réaliser le support articulé de l'élément intermédiaire (19) sur le second élément d'ancrage (15) selon au moins un axe longitudinal (28) écarté verticalement de la partie centrale (4) de l'essieu,

dans laquelle les premiers moyens élastiques comprennent un corps annulaire (23) réalisé en élastomère, dont l'axe est orienté transversalement au plan de symétrie et dont les surface intérieure et extérieure sont en contact respectivement avec le premier élément d'ancrage (11) et l'élément intermédiaire (19),

dans laquelle les seconds moyens élastiques (24) sont agencés afin de s'opposer à toute rotation de l'élément intermédiaire (19 vis-à-vis de l'axe longitudinal (28),

dans laquelle les moyens amortisseurs (9) de la suspension sont décalés vers l'avant du véhicule par rapport aux extrémités de l'essieu (2), de telle sorte que la charge s'exerçant sur la suspension provoque une poussée vers le bas transmise à partir de la partie central (4) de l'essieu (2) vers le support élastique, et

dans laquelle des moyens sont prévus pour, lors d'une augmentation de la charge verticale sur la suspension, fournir une réduction dans la valeur minimale de la force transversale suffisant pour provoquer une rotation de l'élément intermédiaire (19) par rapport à l'axe longitudinal.

2. Suspension selon la revendication 1, caractérisée en ce que l'élément intermédiaire (19) et le second élément d'ancrage (15) possèdent deux parois superposées (25, 26) en contact l'une avec l'autre selon deux surfaces distinctes (27), la paroi de l'élément intermédiaire (19) occupant la position la plus basse, les surfaces de contact (27) étant conformées afin de permettre à l'élément intermédiaire (19) de pivoter par rapport à une surface de contact ou par rapport à l'autre, selon un axe longitudinal (28), et en ce que les seconds moyens d'amortissement élastiques (24) sont agencés de façon à exercer deux poussées transversales dirigées l'une vers l'autre sur les deux faces de l'élément intermédiaire (19) afin de s'opposer à la rotation de ce dernier par rapport aux deux surfaces de contact (27), et une poussée verticale vers le haut tendant à maintenir l'élément intermédiaire (19) et le second élément d'ancrage (15) en contact l'un avec l'autre au niveau des surfaces (27).

3. Suspension selon la revendication 2, caractérisée en ce que les seconds moyens élastiques comprennent deux petits blocs de matériau élastomère (24) disposés dans deux plans inclinés en forme de V, perpendiculairement à la direction longitudinale du véhicule, chaque petit bloc (24) étant interposé avec précontrainte entre une paroi latérale inclinée (21) de l'élément intermédiaire (19) et une paroi (22) selon une inclinaison correspondant à celle du second élément d'ancrage (15).

4. Suspension selon la revendication 1, caractérisée en ce que le corps annulaire (23) en élastomère présente au moins deux fentes diamétralement opposées orientées sensiblement longitudinalement.

FIG. 1

FIG. 2

FIG. 3

0 140 845

FIG. 4

FIG. 5

## FIG. 6

29 29 2

11 12 14

## FIG. 7

## FIG. 8
TRANSVERSE LOAD

AXLE ANGULAR
POSITION

## FIG. 9
STEERING WHEEL ANGLE

TRANSVERSE
ACCELERATION